# EUROPÄISCHE PATENTSCHRIFT

(11) **EP 0 769 371 B1**
(45) Veröffentlichungstag und Bekanntmachung des Hinweises auf die Patenterteilung: **12.06.2002**
(21) Anmeldenummer: 96116214.6
(22) Anmeldetag: 10.10.1996
(51) Int. Cl.: B32B 27/32, H01G 4/18

(54) **Metallisierte Polyolefinfolie**
Metallized polyolefin film
Film en polyoléfine métallisé

(30) Priorität: 20.10.1995 DE 19539093
(43) Veröffentlichungstag der Anmeldung: 23.04.1997
(73) Patentinhaber: Ticona GmbH, 65451 Kelsterbach (DE)
(72) Erfinder: Hatke, Wilfried, Dr., 65719 Hofheim (DE); Kochem, Karl-Heinz, Dr., 66385 St. Ingbert (DE); Grosse Kreul, Theo, 66539 Neunkirchen (DE)

(56) Entgegenhaltungen:
- DD-A- 241 971
- PATENT ABSTRACTS OF JAPAN vol. 95, no. 5 & JP 07 050224 A (TORAY IND INC), 21. Februar 1995
- PATENT ABSTRACTS OF JAPAN vol. 95, no. 6 & JP 07 086088 A (SHIZUKI DENKI SEISAKUSHO KK), 31. März 1995

## Beschreibung

Die Erfindung betrifft metallisierte, insbesondere beidseitig metallisierte Folien, welche sich hervorragend als Dielektrikum in Kondensatoren eignen. Die erfindungsgemäßen Folien sind Polyolefinfolien und zwar solche aus Cycloolefinpolymeren, welche überraschenderweise vor der Metallisierung keinem - ansonsten für Polyolefine üblichen - Verfahren zur Erhöhung der Oberflächenspannung bzw. Oberflächenenergie (wie Koronabehandlung) ausgesetzt werden müssen.

Für den Einsatz von Polymerfilmen als Dielektrikum in Kondensatoren ist der dielektrische Verlustfaktor tan δ, die Temperaturbeständigkeit, d.h. die Beständigkeit der mechanischen (z.B. Schrumpf) und der elektrischen Folieneigenschaften bei erhöhter Temperatur und die Metallisierbarkeit von großer Bedeutung.

Niedrige dielektrische Verlustfaktoren sind insbesondere bei hochfrequenten Wechselstromanwendungen von Interesse, da bei niedrigen tan δ die elektrische Verlustleistung ebenfalls niedrig ist. Erhöhte elektrische Verlustleistung - und damit erhöhtes tan δ - bedeutet Erwärmung, so daß schließlich die Temperaturbeständigkeit des Folienmaterials überschritten werden kann und der Kondensator geschädigt bzw. zerstört werden kann. Ein ideales Kondensatordielektrikum besitzt dementsprechend einen niedrigen dielektrischen Verlustfaktor bei gleichzeitig hoher Temperaturbeständigkeit.

Im Bezug auf die Metallisierbarkeit ist bekannt, daß Polyesterfolien einfacher zu metallisieren sind als Polyolefinfolien, da diese vor der Metallisierung einer Oberflächenbehandlung unterzogen werden müssen, um eine Haftung des Metalls auf der Folie zu erzielen. Die Metallisierung von dünnen Folien für den Einsatz in Kondensatoren ist der Gegenstand intensiven forscherischen Bemühens. Zwischen dem zur Zeit überwiegend als Dielektrikum eingesetzten Polyethylenterephthalat (PET) und Polypropylen (PP) besteht diesbezüglich ein fundamentaler Unterschied. Aufgrund der polaren Polymerstruktur besitzt PET eine kritische Oberflächenspannung von ca. 43 mN/m, die ausreicht, um eine Haftung zum Metall, z.B. Aluminium, zu gewährleisten. Die kritische Oberflächenspannung von Polyolefinfolien liegt dagegen mit 30 bis 33 mN/m in einem Bereich, der nicht ausreicht, um eine Haftung zu der aufgedampften Metallschicht zu gewährleisten. Aus diesem Grund müssen die Oberflächen von Polyolefinfolien mit verschiedenen Verfahren behandelt werden, um die Oberflächenspannung zu erhöhen und eine Benetz-, Verkleb- und Metallisierbarkeit zu erreichen.

Das am häufigsten verwendete Verfahren ist die Behandlung mit einer hochfrequenten Wechselspannung (10-60 kHz, 10-20 kV), die sogenannte Koronabehandlung. Dabei kann die Oberflächenspannung auf bis zu 50 mN/m erhöht werden. Bei Polyolefinfolien, insbesondere biaxial orientierten Folien aus Polypropylen, werden üblicherweise mittels Koronaentladung Oberflächenspannungen von 36 bis 42 mN/m eingestellt. Die Nachteile einer Koronabehandlung sind jedoch, daß z.B. die Oberflächenspannung zeitabhängig ist bei der Behandlung niedermolekulare Bruchstücke der Polymerkette bilden, die zu einer Schwächung des Verbundes zwischen der Polymeroberfläche und einer aufgedampften Metallschicht führen können.

Aus ökonomischen Gründen ist es wünschenswert, einen Kondensator aus einer beidseitig metallisierten und einer unmetallisierten Folie aufzubauen. Wie in US-3,900,775 beschrieben, ist dies zum Beispiel durch die Verwendung einer beidseitig metallisierten Polyethylenterephthalatfolie und einer unmetallisierten Polypropylenfolie möglich. Nachteil dieses Aufbaus ist jedoch der gegenüber Polypropylen stark erhöhte Wert des tan δ von Polyethylenterephthalat. Aus Gründen des besseren dielektrischen Verlustfaktors werden Polyolefinfolien den Polyesterfolien bei Wechselstromanwendungen vorgezogen. Die ökonomische Herstellung von beidseitig bedampften (metallisierten) Polypropylenfolien ist jedoch wesentlich schwieriger und wird bislang nicht industriell durchgeführt. Ein Problem ist die Koronabehandlung, die auf beiden Seiten der Folie vor der Metallisierung durchgeführt werden muß. Diese führt durch die dabei aufgebrachten elektrostatischen Ladungen zu einem Zusammenkleben (Blocken) der Folie auf dem Wickel. Durch die beim Abwickeln auftretenden Adhäsionskräfte werden wiederum Ladungen erzeugt, die ein anschließendes gleichmäßiges Bedampfen mit dem Metall unmöglich machen. Dieses Problem kann laut DE-A-28 02 769 umgangen werden, indem eine Entladung der Folie vor dem Bedampfen vorgenommen wird. Aber auch dies stellt einen zusätzlichen Verfahrensschritt und damit eine zusätzliche Fehlerquelle dar und ist deshalb unwirtschaftlich.

Es besteht deshalb nach wie vor das Bedürfnis nach einer metallisierbaren, vorzugsweise beidseitig metallisierten Polyolefinfolie, bei der die Nachteile des Standes der Technik vermieden werden und die einen niedrigen dielektrischen Verlustfaktor und hohe Temperaturbeständigkeit aufweist.

Die Aufgabe der vorliegenden Erfindung bestand weiterhin darin, ein Verfahren zur Herstellung einer - möglichst beidseitig - metallisierten Polyolefinfolie zur Verfügung zu stellen, das die Nachteile des Standes der Technik, insbesondere den zusätzlichen Verfahrensschritt zur Erhöhung der Oberflächenspannung, vermeidet.

Überraschenderweise wurde nun gefunden, daß sich aus der Vielzahl der Polyolefine die Cycloolefinpolymere - entgegen allen Erwartungen - ohne Oberflächenspannung erhöhende Vorbehandlung metallisieren lassen.

Dementsprechend wird die gestellte Aufgabe gelöst durch eine ein- oder beidseitig metallisierte ein- oder mehrschichtige Polyolefinfolie, wobei mindestens eine äußerste Schicht der unmetallisierten Polyolefinfolie im wesentlichen aus einem Cycloolefinpolymeren besteht, welches vor der Metallisierung keinem Verfahren zur Erhöhung der Oberflächenspannung ausgesetzt wurde.

'Ein- oder beidseitig' metallisiert heißt, daß die Folie auf einer oder auf beiden Oberflächen eine Metallschicht trägt.

Ein- oder mehrschichtig bedeutet, daß die unmetallisierte Folie entweder eine Monofolie ist, also aus nur einer Schicht besteht oder mehrschichtig aufgebaut ist und dementsprechend aus zwei, drei, vier, fünf oder noch mehr Schichten aufgebaut sein kann. Erfindungswesentlich ist hierbei, daß die Monofolie oder zumindest eine äußerste Schicht der Mehrschichtfolie im wesentlichen aus einem Cycloolefinpolymeren besteht.

Der Ausdruck im wesentlichen aus einem Cycloolefinpolymeren besteht' bedeutet, daß die Monofolie oder mindestens eine äußerste Schicht der Mehrschichtfolie zu mindestens 90-100 Gew.-%, bevorzugt mindestens 95-100 Gew.-%, insbesondere mindestens 98-99 Gew.-% (bezogen auf das Gewicht der Monofolie bzw. der äußersten Schicht der Mehrschichtfolie) aus Cycloolefinpolymer besteht. Gegebenenfalls kann die einschichtige Folie oder die äußerste Schicht zusätzlich Additive enthalten, die üblicherweise bei der Folienherstellung eingesetzt werden.

Der Ausdruck vor der Metallisierung keinem Verfahren zur Erhöhung der Oberflächenspannung ausgesetzt bedeutet, daß die Folie nach ihrem üblichen Herstellungsprozess, welcher gewöhnlich die Extrusion, die Streckung und die Thermofixierung umfaßt, keiner zusätzlichen Behandlung unterworfen wird, die die Erhöhung der Oberflächenspannung zur Folge hat. Hierunter sind übliche Verfahren wie die Korona- oder Flammbehandlung zu verstehen. Es ist erfindungswesentlich, daß die Metallisierung erfolgen kann, ohne daß die Folie vorher einem solchen Verfahren unterworfen wird.

Cycloolefinpolymere sind Materialien, die sich durch hohe Wärmeformbeständigkeiten, hohe Elastizitätsmoduln, geringe Wasseraufnahme und gute dielektrische Eigenschaften auszeichnen.

Die DD-A-224 538 beschreibt die Herstellung von Folien aus Norbornen-Ethylen-Copolymeren durch ein Gießfilmverfahren. Die Herstellung von Cycloolefinpolymerfilmen durch Schmelzextrusion wird in EP-A-0 384 694, EP-A-0 610 814, EP-A-0 610 815 und EP-A-0 610 816 beschrieben. Die Verbesserung der mechanischen Eigenschaften der Folien durch monoaxiales oder biaxiales Verstrecken wird ebenfalls in diesen Schriften beschrieben.

Die DD-241 971 und DD-224538 führen aus, daß sich Folien aus Cycloolefinpolymeren durch niedrige dielektrische Verlustfaktoren (tan δ) auszeichnen. Die angegebenen Werte für tan δ von bis zu 1,2•10⁻⁵ liegen unter den Werten wie sie für Polymermaterialien, die nach dem gegenwärtigen Stand der Technik als Dielektrika in Kondensatoren verwendet werden, gefunden werden. Nur Polystyrol weist ähnlich niedrige Werte auf. Wie in DD-241 971 weiter ausgeführt, sind niedrige Werte für tan δ vor allem für hochfrequente Wechselstromanwendungen von Interesse, da es hier durch elektrische Verlustleistung in der Folie zur Erwärmung kommen kann. Aufgrund der Kombination von hoher Temperaturbeständigkeit (Beständigkeit der mechanischen und der elektrischen Folieneigenschaften bei höheren Temperaturen) und niedrigem tan δ sind Cycloolefinpolymere bestens als Folien für Kondensatoren geeignet, die bei hohen Temperaturen und hohen Frequenzen eingesetzt werden können. Folien auf Polystyrolbasis bieten diesen Vorteil nicht, da sie bereits bei Temperaturen um 90 °C zu erweichen beginnen.

Die Kombination der oben genannten Eigenschaften macht Cycloolefinpolymere zu geeigneten Materialien für den Einsatz als Dielektrikum in Wechselspannungsanwendungen mit hohen Frequenzen. Zudem weisen diese Materialien eine sehr gute Konstanz der elektrischen Eigenschaften bis zu Temperaturen, die kurz unterhalb der Glasstufen der Polymere liegen, auf. Deshalb eignen sich Cycloolefinpolymere besonders für den Einsatz in Kondensatoren, die einem elektrischen Wechselfeld bei hohen Frequenzen und hohen Temperaturen ausgesetzt sind.

Cycloolefinpolymere lassen sich sehr gut zu biaxial orientierten Folien mit guten mechanischen Eigenschaften verarbeiten. Die orientierten Filme besitzen Moduli im Bereich von 2,7 bis 4,0 GPa, Reißfestigkeiten von 80 bis 150 MPa und Reißdehnungen im Bereich von 5 bis 100 %. Die Oberflächenspannung dieser Folien liegt im Bereich von 30 bis 31 mN/m und ist somit typisch für Polyolefin-Folien. Ebenfalls typisch ist, daß der polare Anteil an der Oberflächenspannung sehr gering ist. Es war daher zu erwarten, daß Cycloolefinpolymerfolien - wie auch andere Polyolefinfolien - nicht ohne Vorbehandlung zur Erhöhung der Oberflächenspannung zu metallisieren sind. Deshalb war es umso überraschender, daß die Cyclolefincopolymerfolien sich ohne jede Vorbehandlung bei niedriger Oberflächenspannung metallisieren lassen. Dieses Verhalten ist auch weitgehend unabhängig von der Glasstufe des Cycloolefinpolymeren. Diese Erfindung ist insbesondere überraschend, da in weiteren Untersuchungen gefunden wurde, daß jedoch eine Koronabehandlung erforderlich ist, um die Folie bedrucken zu können. Wie bei anderen Polyolefinfolien steigt dabei die Oberflächenspannung der behandelten Folie. Nach der Koronabehandlung werden Werte für die Oberflächenspannung erhalten, wie sie typisch für Polyolefine sind.

Die für die Erfindung geeigneten Cycloolefinpolymere sind Polymere, enthaltend 0,1 bis 100 Gew.-%, bevorzugt 0,1 bis 99 Gew.-%, bezogen auf die Gesamtmasse des Cycloolefinpolymers, polymerisierte Einheiten mindestens eines cyclischen Olefins der Formeln I, II, III, IV, V oder VI, 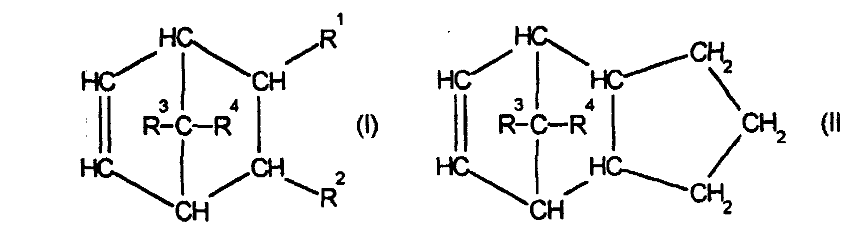 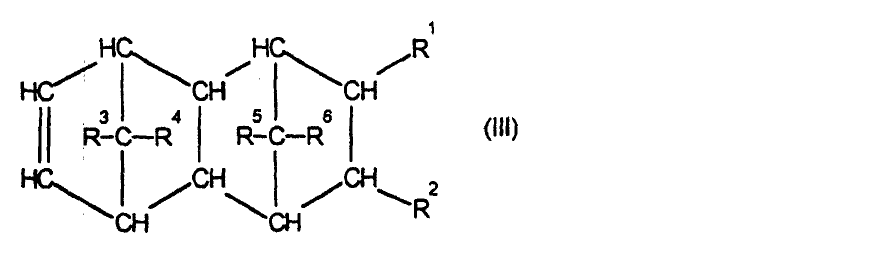 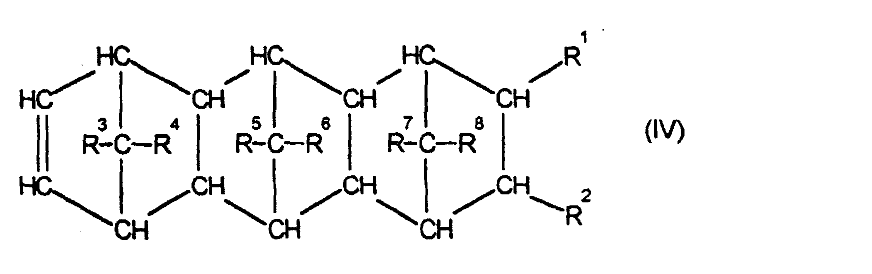 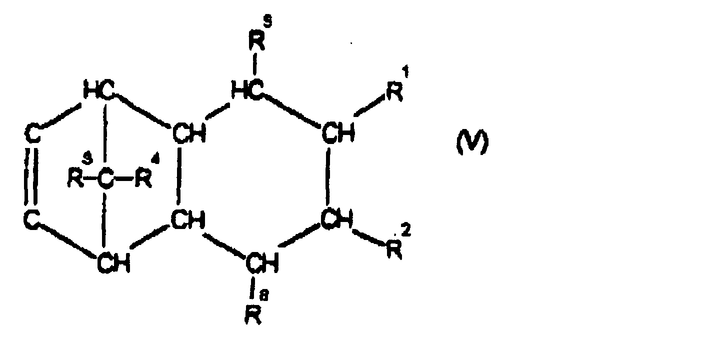 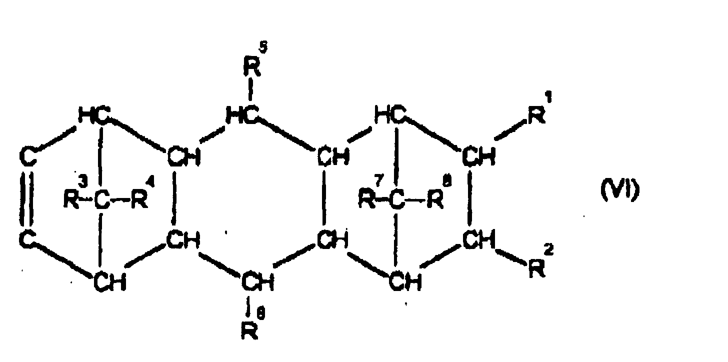 worin R¹, R², R³, R⁴, R⁵, R⁶, R⁷ und R⁸ gleich oder verschieden sind und ein Wasserstoffatom oder einen C₁-C₃₀-Kohlenwasserstoffrest, z.B. einen linearen oder verzweigten C₁-C₈-Alkylrest, C₆ - C₁₈-Arylrest, C₇-C₂₀ -Alkylenarylrest oder einen cyclischen C₃-C₂₀-Alkylrest oder acyclischen C₂-C₂₀-Alkylrest bedeuten, oder zwei oder mehrere Reste R¹ bis R⁸ cyclisch verbunden sind, wobei gleiche Reste in den verschiedenen Formeln eine unterschiedliche Bedeutung haben können,

0 bis 45 Gew.-%, bezogen auf die Gesamtmasse des Cycloolefinpolymers, polymerisierte Einheiten mindestens eines monocyclischen Olefins der Formel VII, 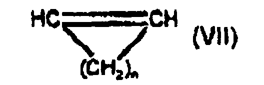 worin n eine Zahl von 2 bis 10 ist,
0 bis 80 Gew.-%, bezogen auf die Gesamtmasse des Cycloolefinpolymers, polymerisierte Einheiten eines acyclischen Olefins der Formel VIII. 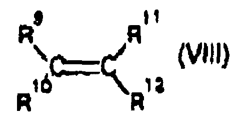 worin R⁹, R¹⁰, R¹¹, R¹² gleich oder verschieden sind und ein Wasserstoffatom oder C₁-C₁₀-Kohlenwasserstoffrest, z.B. einen C₁-C₈-Alkylrest oder C₆-C₁₄-Arylrest bedeuten. Ebenfalls geeignet sind Cycloolefinpolymere erhalten durch ringöffnende Polymerisation mindestens eines der Monomere mit den Formeln I bis VI und anschließende Hydrierung der erhaltenen Produkte.

Bevorzugt enthalten die Cycloolefinpolymere polymerisierte Einheiten mindestens eines polycyclischen Olefins, insbesonders der Formel I oder III und eines acyclischen Olefins der Formel VIII, welches bevorzugt 2 bis 20 C-Atome aufweist, insbesondere Ethylen.

Bevorzugt sind Cycloolefinpolymere, die polymerisierte Einheiten polycyclischer Olefine mit Norbornengrundstruktur, besonders bevorzugt Norbomen oder Tetracyclododecen, enthalten. Bevorzugt sind auch Cycloolefinpolymere, die polymerisierte Einheiten acyclischer Olefine, wie α-Olefine, besonders bevorzugt Ethylen, enthalten. Besonders bevorzugt sind Norbornen/Ethylen- und Tetracyclododecen/Ethylen-Copolymere.

Der Anteil polymerisierter Einheiten acyclischer Olefine der Formel VIII betragt 0 bis 80 Gew.-%, bevorzugt 5 bis 80 Gew-%, besonders bevorzugt 10 bis 60 Gew.-%, bezogen auf die Gesamtmasse des Cycloolefinpolymers.

Die Cycloolefinpolymere weisen im allgemeinen Glastemperaturen zwischen -20 °C und 400 °C, bevorzugt zwischen 50 °C und 200 °C, auf. Die Viskositätszahl (Dekalin, 135 °C, DIN 53728) liegt im allgemeinen zwischen 0,1 und 200 ml/g. bevorzugt zwischen 50 und 150 ml/g.

Die Herstellung der Cycloolefinpolymere geschieht durch eine heterogene oder homogene Katalyse mit metallorganischen Verbindungen und ist in einer Vielzahl von Dokumenten beschrieben. Katalysatorsysteme basierend auf Mischkatalysatoren aus Titan- bzw. Vanadiumverbindungen in Verbindung mit Aluminiumorganylen werden in DD 109 224, DD 237 070 und EP-A-0 156 464 beschrieben. EP-A-0 283 164, EP-A-0 407 870, EP-A-0 485 893 und EP-A-0 503 422 beschreiben die Herstellung von Cycloolefinpolymeren mit Katalysatoren basierend auf löslichen Metallocenkomplexen. Auf die in diesen Schriften beschriebenen Herstellverfahren von Cycloolefinpolymeren wird hier ausdrücklich bezuggenommen.

Die erfindungsgemäß verwendeten Cycloolefinpolymerfolien können die bei der Folienherstellung üblichen Additive wie feine inerte Partikel, die das Schlupf- und Wickelverhalten verbessern, enthalten. Solche Partikel, die in Menge von 0 bis 1 % enthalten sein können, sind beispielsweise: SiO₂, Al₂O₃, Silikate mit einem SiO₂-Anteil von mindestens 30 Gew.-%, amorphe und kristalline Tonminerale, Alumosilikate, Oxide von Mg, Zn, Zr und Ti, Sulfate von Ca, Mg und Ba, Phosphate von Li, Na und Ca (inklusive der Monohydrogensalze und Dihydrogensalze), Benzoate von Li, Na und K, Terephthalate von Ca, Ba, Zn und Mn, Titanate von Mg, Ca, Ba, Zn, Cd, Pb, Sr, Mn, Fe, Co und Ni, Chromate von Ba und Pb, Kohlenstoff (z.B. Ruß oder Graphit), Glas (Glaspulver und Glaskugeln), Carbonate von Ca und Mg, Flußspat, Sulfide von Zn und Mo, organische Polymersubstanzen wie Polytetrafluorethylenpolyethylen, Talkum, Lithiumfluorid, und die Ca-, Ba-, Zn- und Mn-Salze von organischen Säuren.

Die Folie kann auch geeignete Additive wie z.B. Stabilisatoren, Neutralisationsmittel, Gleitmittel oder Antioxidantien enthalten. Prinzipiell sind Additive, die für Polyolefine wie Polyethylen oder Polypropylen verwendet werden, auch für die Cycloolefinpolymerfolien geeignet. Als UV-Stabilisatoren können beispielsweise Absorber wie Hydroxyphenylbenzotriazole, Hydroxybenzophenone, Formamidin oder Benzyliden-Campher, Quencher wie Zimtsäureester oder Nickel-Chelate, Radikalfänger wie sterisch gehinderte Phenole, Hydroperoxidzersetzer wie Nickel- oder Zink-Komplexe schwefelhaltiger Verbindungen oder Lichtstabilisatoren vom HALS-Typ, sowie deren Gemische eingesetzt werden. Als Gleitmittel können beispielsweise verwendet werden: Fettsäuren sowie deren Ester, Amide und Salze, Silikone oder Wachse wie PP- oder PE-Wachse. Als Antioxidantien können beispielsweise zugesetzt werden Radikalfänger wie substituierte Phenole und aromatische Amine und/oder Peroxidzersetzer wie Phosphite, Phosphate und Thioverbindungen.

Die Herstellung der Cycloolefinpolymerfolien geschieht in üblicher, dem Fachmann bekannter Weise, zum Beispiel durch Gießen von Filmen aus Lösung, Extrusion aus der Schmelze mit Breitschlitzdüsen und anschließender mono- oder biaxialer Verstreckung, Extrusion aus der Schmelze mit Ringdüsen unter anschließender Verstreckung mittels eines Lufstromes (Folienblasen). Bevorzugt ist die Breitschlitzdüsenextrusion mit anschließender sequentieller biaxialer Orientierung und Thermofixierung. Hierbei wird das Polymer in einem Extruder erwärmt und aufgeschmolzen und durch eine Breitschlitzdüse auf eine Abkühlwalze extrudiert; gewöhnlich wird der so erhaltene Vorfilm dann von der Abkühlwalze abgezogen und anschließend biaxial, d.h. meist zunächst in Maschinen- und dann in Querrichtung, gestreckt. An diese biaxiale Orientierung schließt sich üblicherweise eine Thermofixierung an, worauf die Folie aufgewickelt wird. Bei diesem Verfahren kann die Folie sowohl als Monofolie als auch als Mehrschichtfolie extrudiert werden, wobei dann zumindest eine äußerste Schicht im wesentlichen aus Cycloolefinpolymeren, wie oben beschrieben, besteht. Die übrigen Schichten der Mehrschichtfolie können beispielsweise ebenfalls aus Cycloolefinpolymeren - gegebenenfalls anderen als dem in der Deckschicht verwendeten - bestehen aber auch aus anderen Polymeren insbesondere Polyolefinen wie Polyethylen oder Polypropylen. Auf diese Weise lassen sich Folien mit einem Dickenspektrum von 2 bis 50 µm, vorzugsweise 3 bis 30 µm, herstellen.

Die so hergestellte Folie kann dann ohne vorherige Maßnahmen zur Erhöhung der Oberflächenenergie, d.h. beispielsweise ohne vorherige Koronabehandlung, mit einer Metallschicht versehen werden. Als Metalle eignen sich beispielsweise Aluminium, Zink, Mischungen aus Zink und Aluminium oder Silber. Bevorzugt werden Aluminium und Zink, sowie Mischungen und/oder Legierungen hiervon eingesetzt. Die Metallisierung geschieht in üblicher, dem Fachmann geläufiger Weise, beispielsweise durch Bedampfen der Folie im Vakuum. Der erfindungsgemäße Vorteil ist darin zu sehen, daß die Cycloolefinpolymerfolien nicht nur einseitig sondern nunmehr auch beidseitig metallisiert werden können.

Aus den metallisierten Cycloolefinpolymerfolien lassen sich nach üblichen Verfahren Kondensatoren herstellen.

Nachfolgend ist die Erfindung anhand von Beispielen näher erläutert.

### Beispiel 1

### Herstellung eines Norbornen/Ethylen-Polymeren (COC-A)

Eine 1,5-dm³-Reaktor wurde mit 1 Liter Benzinfraktion (Siedebereich 90 bis 110 °C) und 20 ml toluolischer Methylaluminoxanlösung (10,1 Gew.-% Methylaluminoxan der Molmasse 1300 g/mol nach kryoskopischer Bestimmung) befüllt und bei 70 °C ca. 30 min gerührt, um eventuell vorhandene Verunreinigungen zu entfernen. Nach Ablassen der Lösung wurde der Reaktor mit 480 cm³ einer 85-gewichtsprozentigen Lösung von Norbornen in Toluol beschickt. Durch mehrfaches Aufdrücken von Ethylen (6 bar G) wurde die Lösung mit Ethylen gesättigt und anschließend 10 cm³ der toluolischen Methylaluminoxanlösung in den Reaktor gegeben und 5 min bei 70 °C gerührt. Eine Lösung von 5,43 mg lsopropylen-(1-cyclopentadienyl)-(1-indenyl)-zirkondichlorid in 10 cm³ toluolischer Methylaluminoxanlösung wurde nach 15-minütiger Voraktivierung zugegeben.

Unter Rühren (750 UPM) wurde 30 min bei 70 °C polymerisiert, wobei der Ethylendruck durch Nachdosieren bei 6 bar G gehalten wurde. Die homogene Reaktionslösung wurde in ein Gefäß abgelassen und mit ca. 1 ml Wasser versetzt. Anschließend wird die Lösung mit einem Filterhilfsmittel versetzt und über eine Drucknutsche filtriert. Diese Lösung wird schnell in 5 dm³ Aceton eingegossen, 10 min gerührt und filtriert. Der erhaltene Feststoff wurde mit Aceton gewaschen. Das erneut filtrierte Polymer wurde bei 80 °C und einem Druck von 0,2 bar 15 Stunden getrocknet.

Es wurden 89,1 g eines farblosen Polymers erhalten. Zur Bestimmung der Viskositätszahl wurden 0,1 g des Polymeren in 100 ml Dekalin gelöst. Die Lösung wurde in einem Kappillarviskosimeter bei 135 °C vermessen. Die Viskositätszahl betrug 56,5 dl/g. Die Glastemperaturen wurden mit einem DSC7 der Firma Perkin Elmer bestimmt. Die Glastemperatur wurde bei einer Heizrate von 20 °C/min aus der zweiten Heizkurve ermittelt und betrug 175 °C. Der Gehalt an Norbornen wurde mittel ¹³C-Kernresonanzspektroskopie zu 58-Mol% ermittelt. Das Molekulargewicht des Polymeren wurde mittels Gelpermeationschromatographie bei 135 °C ermittelt. Als Standards wurden Polyethylenfraktionen verwendet. Für das Polymer wurden folgende Werte gefunden:
Mₙ : 21500 g/mol
M_{w}: 45000 g/mol
M_{w}/Mₙ : 2,1.

### Herstellung eines Norbomen/Ethylen-Polymeren (COC-B)

Die Polymerisation wurde, wie oben für COC-A beschrieben, durchgeführt. Es wurde jedoch lsopropylen-bis(1-indenyl)-zirkoniumdichlorid als Metallocen-Katalysator verwendet und die Polymerisation bei einem Druck von 20 bar G durchgeführt. Es wurde ein statistisches Copolymer, welches einen mittels ¹³C-NMR ermittelten Norbornengehalt von 40 Mol-%, eine Glasstufe von 75 °C (DSC-Messung) und eine Viskositätszahl von 120 ml/g (Dekalin, 135 °C, 0,1 g/dl) besaß, hergestellt.

### Herstellung eines Norbornen/Ethylen-Polymeren (COC-C)

Die Polymerisation wurde, wie oben für COC-A beschrieben, durchgeführt. Es wurde jedoch lsopropylen-bis(1-indenyl)-zirkoniumdichlorid als Metallocen-Katalysator verwendet und die Polymerisation bei einem Druck von 10 bar G durchgeführt. Es wurde ein statistisches Copolymer, welches einen mittels ¹³C-NMR ermittelten Norbornengehalt von 53 Mol-%, eine Glasstufe von 140 °C (DSC-Messung) und eine Viskositätszahl von 60 ml/g (Dekalin, 135 °C, 0,1 g/dl) besaß, hergestellt.

### Herstellung einer Folie (aus COC-B)

Das COC-B wurde bei einer Temperatur von 200 °C zu einer Folie mit einer Dicke von 400 µm und einer Breite von 250 mm extrudiert. Aus dieser Folie wurden Stücke von 200•200 mm² herausgeschnitten und in einer Folienstreckapparatur (Karo III der Firma Brückner, Siegsdorf) bei 100 °C simultan längs und quer um den Faktor 3,0 verstreckt.

Die so erhaltene Folie hat folgende Eigenschaften:

| | |
|---|---|
| Dicke | 45 µm |
| E-Modul | 2,9 GPa |
| Reißfestigkeit | 80 MPa |
| Reißdehnung | 20 % |
| Wasserdampfdurchlässigkeit (23 °C, 85% rel. Feuchte) | 0,6 g • 40 µm/m² • d |
| Oberflächenspannung | 30 mN/m |

### Herstellung einer Folie (aus COC-C)

Das COC-C wurde bei einer Temperatur von 240 °C zu einer Folie mit einer Dicke von 300 µm und einer Breite von 250 mm extrudiert. Aus dieser Folie wurden Stücke von 200•200 mm² herausgeschnitten und in einer Folienstreckapparatur (Karo III der Firma Brückner, Siegsdorf) bei 155 °C simultan längs und quer um den Faktor 3,0 verstreckt.

Die so erhaltene Folie hat folgende Eigenschaften:

| | |
|---|---|
| Dicke | 35 µm |
| E-Modul | 3,2 GPa |
| Reißfestigkeit | 90 MPa |
| Reißdehnung | 50 % |
| Wasserdampfdurchlässigkeit (23 °C, 85% rel. Feuchte) | 1 g • 40 µm/m² • d |
| Oberflächenspanung | 29 mN/m |

### Metallisierung der Folie

Die Folie aus den COC's B und C wurden in DIN-A4 große Teile geschnitten und ohne jede weitere Oberflächenbehandlung einseitig und beidseitig mit Aluminium bedampft (Metallisierungsbedingen: Druck 10⁻⁵ mbar, Zeit 11 min). Die Schichtdicke des aufgedampten Aluminiums betrug ca. 40 nm.

Die Haftung der Aluminiumschicht auf den Folien wurde in Anlehnung an ASTM D 3359 jedoch ohne Gitterschnitt durch Aufkleben und rasches Abziehen eines Klebestreifens (Tesafilm TP 104) getestet. Bei beiden Folien ließ sich von beiden bedampften Seiten kein Aluminium ablösen.

Die Wasserdampfdurchlässigkeit (23 °C, 85% rel. Feuchte) der bedampften Folien (aus COC-B) betrug anschließend einseitig bedampft 0,5 g • 40 µm/m² • d, und beidseitig bedampft 0,4 g • 40 µm/m² • d.

### Vergleichsbeispiel

Eine biaxial orientierte, nicht coronabehandelte Folie aus hochisotaktischem Polypropylen (Trespaphan PM A 10, Hersteller Fa. Hoechst, Dicke 10 µm) wurde analog Beispiel 1 in DIN A4 große Muster geschnitten und ohne jede weitere Oberflächenbehandlung einseitig mit Aluminium bedampft (Versuchsbedingungen analog Beispiel 1). Die Oberflächenspannung auf der zu metallisierenden Seite betrug vor der Metallisierung 31 mN/m. Die Dicke der aufgedampften Aluminiumschicht betrug ca. 40 nm. Die Haftung der Aluminiumschicht wurde wie in Beispiel 1 geprüft. Das Aluminium ließ sich völlig mit dem Klebeband von der Folienoberfläche ablösen.

## Patentansprüche

1. Ein- oder beidseitig metallisierte ein- oder mehrschichtige Polyolefinfolie, wobei mindestens eine äußerste Schicht der unmetallisierten Polyolefinfolie im wesentlichen aus einem Cycloolefinpolymeren besteht, welches vor der Metallisierung keinem Verfahren zur Erhöhung der Oberflächenspannung ausgesetzt wurde, und die Metallisierung auf mindestens einer Schicht aus Cycloolefinpolymer erfolgt ist, wobei das Cycloolefinpolymer ein Polymer ist, enthaltend 0,1 bis 100 Gew.-%, bezogen auf die Gesemtmasse des Cycloolefinpolymers, polymerisierte Einheiten mindestens eines cyclischen Olefins der Formeln I, II, III, IV, V oder VI. 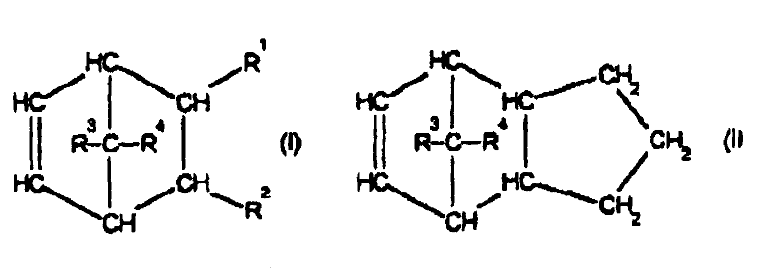 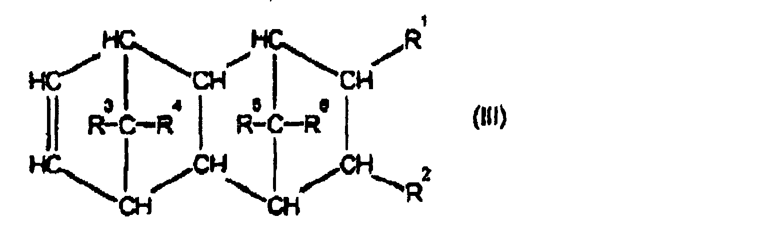 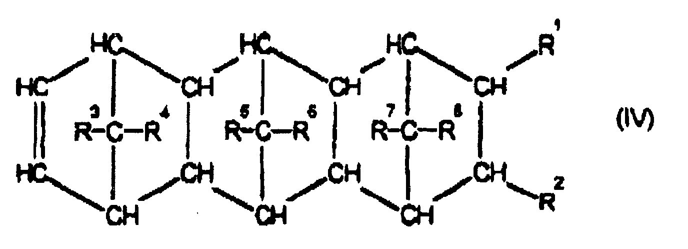 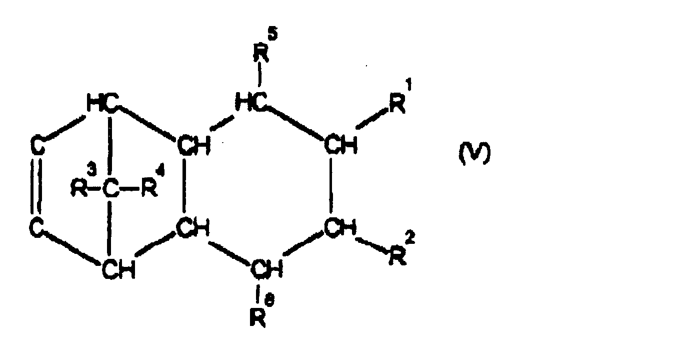 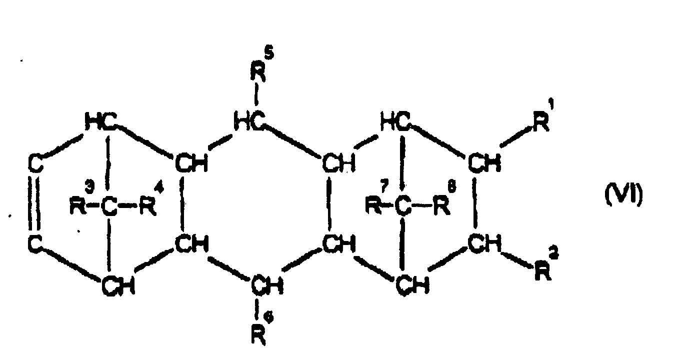 worin R¹, R², R³, R⁴, R⁵, R⁶, R⁷ und R⁸ gleich oder verschieden sind und ein Wasserstoffatom oder einen C₁-C₃₀-Kohlenwasserstoffrest bedeuten, oder zwei oder mehrere Reste R¹ bis R⁸ cyclisch verbunden sind, wobei gleiche Reste in den verschiedenen Formeln eine unterschiedliche Bedeutung haben können,
0 bis 45 Gew.-%, bezogen auf die Gesamtmasse des Cycloolefinpolymers, polymerisierte Einheiten mindestens eines monocyclischen Olefins der Formel VII, 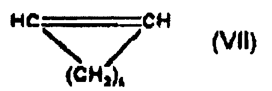 worin n eine Zahl von 2 bis 10 ist,
0 bis 80 Gew.-%, bezogen auf die Gesamtmasse des Cycloolefinpolymers, polymerisierte Einheiten eines acyclischen Olefins der Formel VIII, 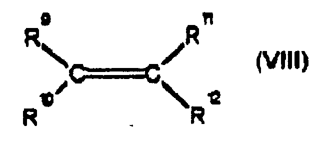 worin R⁹, R¹⁰, R¹¹, R¹² gleich oder verschieden sind und ein Wasserstoffatom oder C₁-C₁₀-Kohlenwasserstoffrest bedeuten.

2. Metallisierte Cycloolefinpolymerfolie nach Anspruch 1, **dadurch gekennzeichnet, daß** das Cycloolefinpolymer ein Norbomen/Ethylencopolymer ist.

3. Metallisierte Cycloolefinpolymerfolie nach einem oder mehreren der Ansprüche 1 bis 2, **dadurch gekennzeichnet, daß** die metallisierte Folie mit Aluminium, Zink, Silber oder Mischungen oder Legierungen aus zwei oder mehreren dieser Metalle metallisiert ist.

4. Metallisierte Cycloolefinpolymerfolie nach einem oder mehreren der Ansprüche 1 bis 3, **dadurch gekennzeichnet, daß** die Folie eine Monofolie ist.

5. Metallisierte Cycloolefinpolymerfolie nach einem oder mehreren der Ansprüche 1 bis 3, **dadurch gekennzeichnet, daß** die Folie eine 2-, 3- oder Mehrschichtfolie ist.

6. Metallisierte Cycloolefinpolymerfolie nach einem oder mehreren der Ansprüche 1 bis 5, **dadurch gekennzeichnet, daß** die Folie beidseitig metallisiert ist.

7. Metallisiere Cycloolefinpolymerfolie nach einem der Ansprüche 1 bis 6, **dadurch gekennzeichnet, daß** die Folie 2 bis 50 µm, vorzugsweise 3 bis 30 µm, dick ist.

8. Metallisierte Cycloolefinpolymerfolie nach einem der Ansprüche 1 bis 7, **dadurch gekennzeichnet, daß** die Folie biaxial orientiert ist.

9. Verwendung einer metallisierten Cycloolefinpolymerfolie nach einem oder mehreren der Ansprüche 1 bis 8, zur Herstellung von Kondensatoren.

10. Kondensator, enthaltend eine metallisierte Cycloolefinpolymerfolie nach einem oder mehreren der Ansprüche 1 bis 8.

11. Verwendung eines Cycloolefinpolymeren zur Herstellung einer metallisierten Folie, wobei die Folie vor der Metallisierung keinem Verfahren zur Ethöhung der Oberflächenspannung unterworfen wurde.

## Claims

1. A one- or two-sided-metalized, single- or multilayer polyolefin film in which at least one outermost layer of the unmetalized polyolefin film essentially consists of a cycloolefin polymer which has not been subjected to a process for increasing the surface tension before the metalization, and the metalization is performed on at least one layer made of cycloolefin polymer, where the cycloolefin polymer is a polymer comprising from 0.1 to 100% by weight, based on the total weight of the cycloolefin polymer, of polymerized units of at least one cyclic olefin of the formula I, II, III, IV, V or VI, 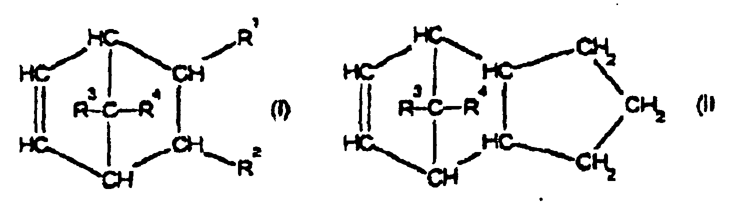 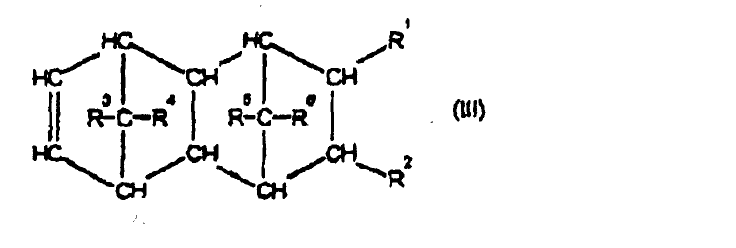 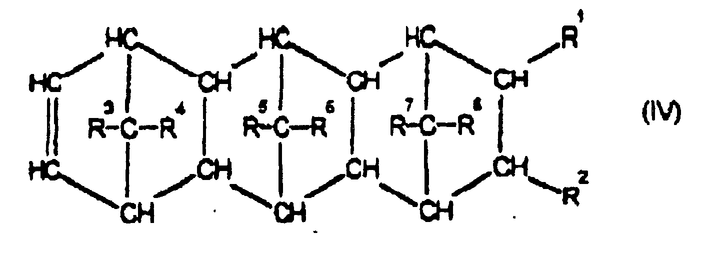 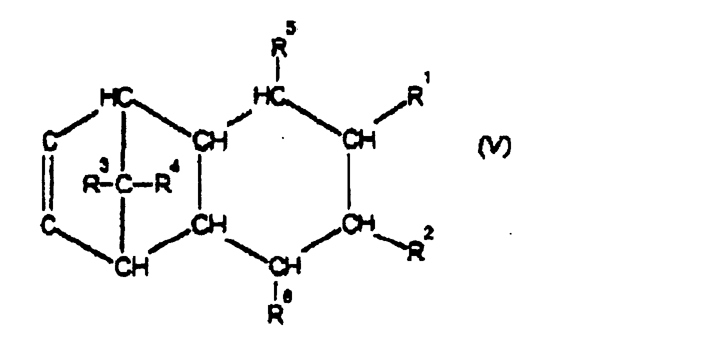 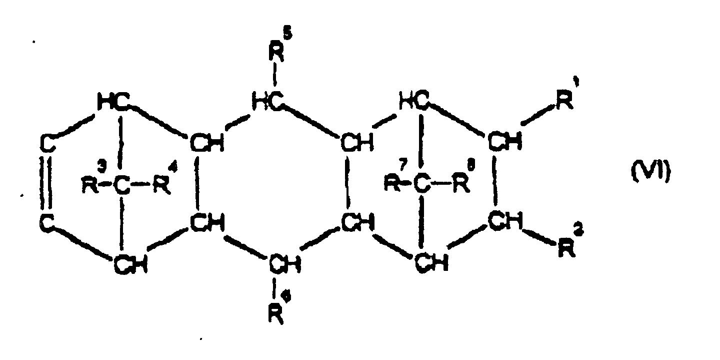 in which R¹, R², R³, R⁴, R⁵, R⁶, R⁷ and R⁸ are identical or different and are a hydrogen atom or a C₁-C₃₀-hydrocarbon radical, or two or more radicals R¹ to R⁸ are connected to form a ring, it being possible for identical radicals in the various formulae to have different meanings,
from 0 to 45% by weight, based on the total weight of the cycloolefin polymer, of polymerized units of at least one monocyclic olefin of the formula VII, 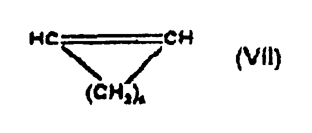 in which n is a number from 2 to 10,
from 0 to 80% by weight, based on the total weight of the cycloolefin polymer, of polymerized units of an acyclic olefin of the formula VIII, 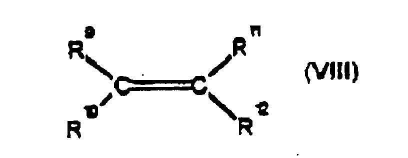 in which R⁹, R¹⁰, R¹¹, and R¹² are identical or different and are a hydrogen atom or C₁-C₁₀-hydrocarbon radical .

2. A metalized cycloolefin polymer film as claimed in claim 1, wherein the cycloolefin polymer is a norbornene-ethylene copolymer.

3. A metallized cycloolefin polymer film as claimed in one or both of claims 1 and 2, wherein the metalized film has been metalized with aluminum, zinc, silver or a mixture or alloy of two or more of these metals.

4. A metalized cycloolefin polymer film as claimed in one or more of claims 1 to 3, wherein the film is a monofilm.

5. A metallized cycloolefin polymer film as claimed in one or more of claims 1 to 3, wherein the film is a 2-, 3- or multilayer film.

6. A metallized cycloolefin polymer film as claimed in one or more of claims 1 to 5, wherein the film has been metalized on both sides.

7. A metalized cycloolefin polymer film as claimed in any one of claims 1 to 6, wherein the film has a thickness of from 2 to 50 µm, preferably from 3 to 30 µm.

8. A metalized cycloolefin polymer film as claimed in any one of claims 1 to 7, wherein the film has been biaxially oriented.

9. The use of a metalized cycloolefin polymer film as claimed in one or more of claims 1 to 8 for the production of capacitors.

10. A capacitor containing a metalized cycloolefin polymer film as claimed in one or more of claims 1 to 8.

11. The use of a cycloolefin polymer for the production of a metalized film, where the film has not been subjected to a process for increasing the surface tension before the metalization.

## Revendications

1. Film en polyoléfine mono- ou multicouche métallisé sur une ou les deux faces, dans lequel au moins une couche la plus externe du film en polyoléfine non métallisé est essentiellement constituée d'un polymère cyclo-oléfinique qui n'a pas été soumis à un procédé destiné à augmenter la tension superficielle avant la métallisation, et la métallisation est réalisée sur au moins une couche en polymère cyclo-oléfinique, le polymère cyclo-oléfinique étant un polymère renfermant de 0,1 à 100 % en poids, par rapport à la masse totale du polymère cyclo-oléfinique, de motifs polymérisés d'au moins une oléfine cyclique de formules I, II, III, IV, V ou VI, 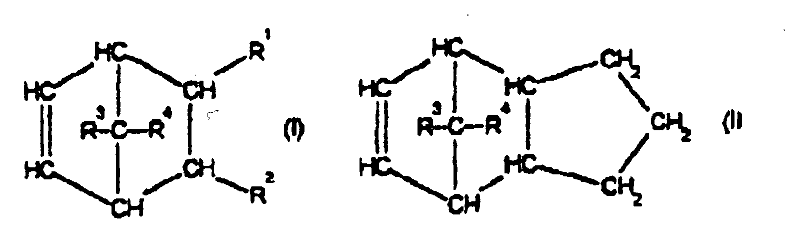 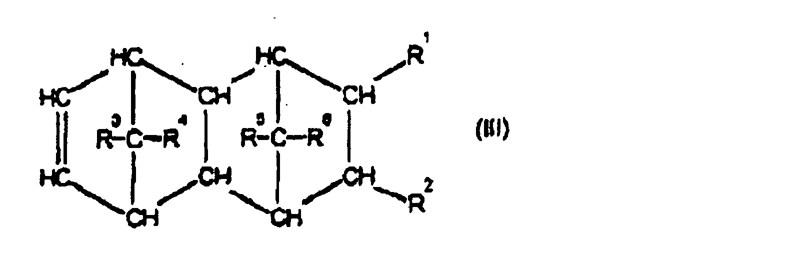 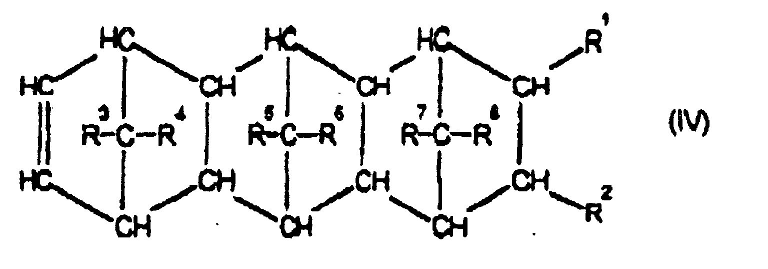 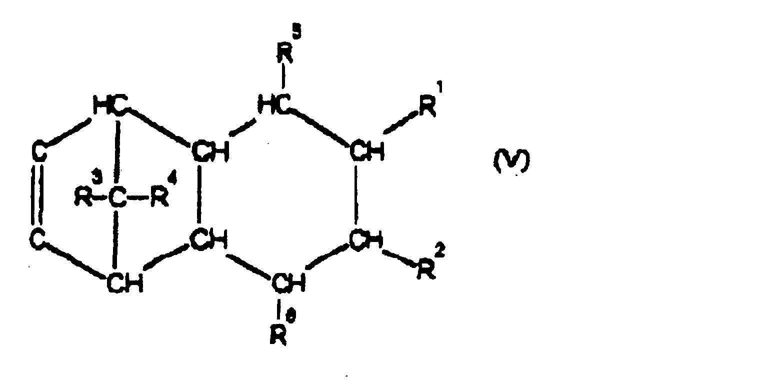 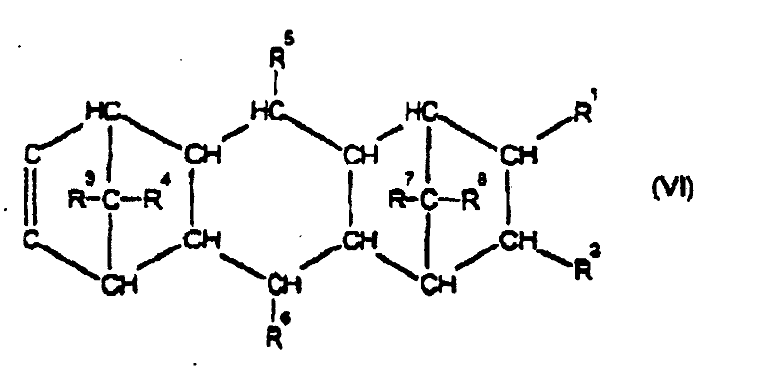 dans lesquelles R¹, R², R³, R⁴, R⁵, R⁶, R⁷ et R⁸ sont identiques ou différents et représentent un atome d'hydrogène ou un radical hydrocarboné en C₁-C₃₀, ou deux ou plus des radicaux R¹ à R⁸ sont liés en formant un cycle, des radicaux identiques dans les diverses formules pouvant présenter une signification différente,
de 0 à 45 % en poids, par rapport à la masse totale du polymère cyclo-oléfinique, de motifs polymérisés d'au moins une oléfine monocyclique de formule VII 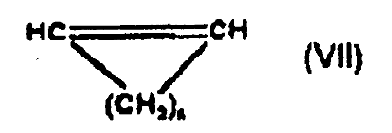 dans laquelle n est un entier de 2 à 10,
de 0 à 80 % en poids, par rapport à la masse totale du polymère cyclo-oléfinique, de motifs polymérisés d'une oléfine cyclique de formule VIII, 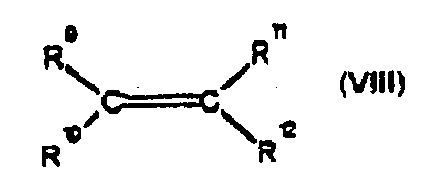 dans laquelle R⁹, R¹⁰, R¹¹ et R¹² sont identiques ou différents et représentent un atome d'hydrogène ou un radical hydrocarboné en C₁-C₁₀.

2. Film en polymère cyclo-oléfinique métallisé selon la revendication 1, **caractérisé en ce que** le polymère cyclo-oléfinique est un copolymère norbornène/éthylène.

3. Film en polymère cyclo-oléfinique métallisé selon l'une ou plusieurs des revendications 1 à 2, **caractérisé en ce que** le film métallisé est métallisé avec de l'aluminium, du zinc, de l'argent ou des mélanges ou alliages de deux ou plus de ces métaux.

4. Film en polymère cyclo-oléfinique métallisé selon l'une ou plusieurs des revendications 1 à 3, **caractérisé en ce que** le film est un monofilm.

5. Film en polymère cyclo-oléfinique métallisé selon l'une ou plusieurs des revendications 1 à 3, **caractérisé en ce que** le film est un film bicouche, tricouche ou multicouche.

6. Film en polymère cyclo-oléfinique métallisé selon l'une ou plusieurs des revendications 1 à 5, **caractérisé en ce que** le film est métallisé sur les deux faces.

7. Film en polymère cyclo-oléfinique métallisé selon l'une quelconque des revendications 1 à 6, **caractérisé en ce que** le film présente une épaisseur de 2 à 50 µm, de préférence de 3 à 30 µm.

8. Film en polymère cyclo-oléfinique métallisé selon l'une quelconque des revendications 1 à 7, **caractérisé en ce que** le film est orienté biaxialement.

9. Utilisation d'un film en polymère cyclo-oléfinique métallisé selon l'une ou plusieurs des revendications 1 à 8 pour la production de condensateurs.

10. Condensateur comprenant un film en polymère cyclo-oléfinique métallisé selon l'une ou plusieurs des revendications 1 à 8.

11. Utilisation d'un polymère cyclo-oléfinique pour la production d'un film métallisé, le film n'ayant été soumis à aucun procédé destiné à augmenter la tension superficielle avant la métallisation.
